(19) Europäisches Patentamt
European Patent Office
Office européen des brevets

(11) Veröffentlichungsnummer: **0 234 047**
**A2**

# (12) EUROPÄISCHE PATENTANMELDUNG

(21) Anmeldenummer: **86118110.5**

(51) Int. Cl.[4]: **C08G 75/08**, C08G 59/14

(22) Anmeldetag: **29.12.86**

(30) Priorität: **29.01.86 CH 341/86**

(43) Veröffentlichungstag der Anmeldung:
**02.09.87 Patentblatt 87/36**

(84) Benannte Vertragsstaaten:
**AT BE CH DE ES FR GB IT LI LU NL SE**

(71) Anmelder: **Sika AG, vorm. Kaspar Winkler & Co.**
**Tüffenwies 16-22**
**CH-8048 Zürich(CH)**

(72) Erfinder: **Widmer, Jürg, Dr.**
**Winzerhalde 34**
**CH-8049 Zürich(CH)**
Erfinder: **Leu, Gerhard**
**Hegaustrasse 3**
**CH-8212 Neuhausen a. Rheinfall(CH)**
Erfinder: **Sulser, Ueli**
**Hönggerstrasse 12**
**CH-8102 Oberengstringen(CH)**

(74) Vertreter: **Blum, Rudolf Emil Ernst et al**
**c/o E. Blum & Co Patentanwälte Vorderberg 11**
**CH-8044 Zürich(CH)**

## (54) Durch Einwirkung von Feuchtigkeit aushärtende Zusammensetzung.

(57) Die durch Einwirkung von Feuchtigkeit aushärtende Zusammensetzung enthält:

a) eine oder mehrere Episulfidverbindungen, die im Durchschnitt mehr als eine l,2-Epithiopropylethergruppe der Formel (I)

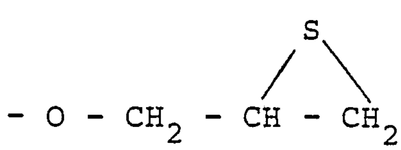

(I)

pro Molekül aufweisen, und

b) eines oder mehrere aliphatische N,N'-dialkylsubstituierte Diketimine der allgemeinen Formel (II)

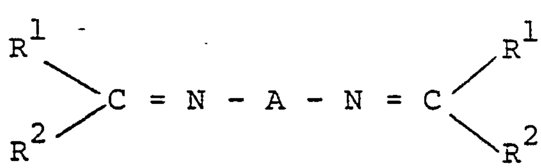

(II)

EP 0 234 047 A2

worin
A ein zweiwertiger aliphatischer, cycloaliphatischer oder arylaliphatischer Rest ist, und
$R^1$ und $R^2$ je einen Alkylrest bedeuten, oder zusammen mit dem C-Atom, an welches sie gebunden sind, einen Cycloalkylrest oder Cycloalkenylrest bilden, und

c) mindestens einen Stoff, ausgewählt aus der Gruppe der Erhärtungsbeschleuniger sowie handelsüblicher Lösungsmittel, Reaktivverdünner, Weichmacher, Thixotropierungszusätze, Füllstoffe und Pigmente.

Diese Zusammensetzung kann als Lacke, Anstriche und Beschichtungen für Stahl und Beton verwendet werden.

Es wird auch ein Verfahren zur Herstellung von l,2-Epithiopropylethern beschrieben.

**Durch Einwirkung von Feuchtigkeit aushärtende Zusammensetzung**

Erfindungsgegenstand ist eine bei Umgebungstemperatur feuchtigkeitshärtende Zusammensetzung, bestehend aus einer oder mehreren mehrwertigen Episulfidverbindungen, einem oder mehreren disubstituierten Diketiminen und gegebenenfalls einem Härtungsbeschleuniger sowie den üblichen in der Lack-und Anstrichmittelindustrie gebräuchlichen Additiven, Thixotropierungsmittel, Lösungsmitteln und Füllstoffen.

Kalt härtbare Zusammensetzungen aus Gemischen von Polyglycidylethern, die im Handel als Epoxidharze bezeichnet werden, und Polyaminen finden seit langem in der Bauindustrie und im Korrosionsschutz als Anstrichstoffe, Spritzlacke und Spritzbeschichtungen sowie für Imprägnierungen Verwendung.

Auch Zusammensetzungen aus Epoxidharzen und disubstituierten Diketiminen können für diese Zwecke als feuchtigkeitshärtende Systeme zur Anwendung kommen und sind z.B. in den Patentschriften US 3 026 285 und GB 905 725 beschrieben.

Die Verarbeitungszeit dieser Epoxidharz/Diketimingemische beträgt in der Regel mehrere Stunden, was gegenüber "normalen" Epoxidharz/Polyamingemischen, die nur kurze Verarbeitungszeiten von in der Regel unter 30 Minuten besitzen, besonders dann ein Vorteil ist, wenn sie mit einer einfachen Einkomponenten-Spritzanlage verarbeitet werden.

Die Aushärtungszeit dieser Gemische, also die Zeit, die zur vollen Entwicklung der Gebrauchseigenschaften erforderlich ist, beträgt bei 20-25°C in der Regel einen bis mehrere Tage. Bei Temperaturen unter 8°C verläuft die Härtungsreaktion so langsam, dass diese Gemische nicht mehr eingesetzt werden können. Man kann solchen Gemischen Stoffe zusetzen, die die Härtungsreaktion beschleunigen. Nachteilig daran ist, dass solche beschleunigenden Stoffe, wie z.B. Phenole, Alkohole oder organische Säuren, die bei der Härtung nicht verbraucht werden, die Gebrauchseigenschaften der gehärteten Harze, z.B. die mechanischen Festigkeiten, die Beständigkeit gegen Lösungsmittel, Wasser und Chemikalien, sowie die Beständigkeit gegen Wärmeeinwirkung, ungünstig beeinflussen.

Der vorliegenden Erfindung lag daher die Aufgabe zugrunde, eine durch Einwirkung von Wasser in Form von Luftfeuchtigkeit aushärtende Zusammensetzung zu finden, die bei extrem schneller Aushärtung eine Verarbeitungszeit von mehreren Stunden aufweist und auch bei Umgebungstemperaturen von 0 und 8°C noch vollständig aushärtet.

Die ausgehärtete Zusammensetzung sollte zusätzlich die bekannt guten mechanischen und chemischen Eigenschaften von Polyamin-gehärteten Epoxidharzen aufweisen.

Die erfindungsgemässe Aufgabe konnte gelöst werden durch Verwendung von disubstituierten Diketiminen und Episulfidverbindungen, die im Durchschnitt mehr als eine l,2-Epithiopropylethergruppe aufweisen, und im folgenden als Episulfidharze bezeichnet werden, als reaktive Komponenten in der erfindungsgemässen Zusammensetzung.

Die durch Einwirkung von Feuchtigkeit aushärtende Zusammensetzung enthält:

a) eine oder mehrere Episulfidverbindungen, die im Durchschnitt mehr als eine l,2-Epithiopropylethergruppe der Formel (I)

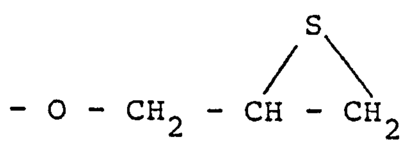

(I)

pro Molekül aufweisen, und

b) eines oder mehrere aliphatische N,N'-dialkylsubstituierte Diketimine der allgemeinen Formel (II)

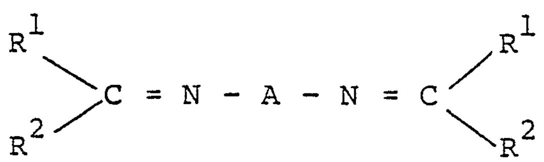

(II)

worin

A ein zweiwertiger aliphatischer, cycloaliphatischer oder arylaliphatischer Rest ist, und

$R^1$ und $R^2$ je einen Alkylrest bedeuten, oder zusammen mit dem C-Atom, an welches sie gebunden sind,

einen Cycloalkylrest oder Cycloalkenylrest bilden, und

c) mindestens einen Stoff, ausgewählt aus der Gruppe der Erhärtungsbeschleuniger sowie handelsüblicher Lösungsmittel, Reaktivverdünner, Weichmacher, Thixotropierungszusätze, Füllstoffe und Pigmente.

Bevorzugte Ausführungsformen dieser Zusammensetzung sind in den abhängigen Ansprüchen beschrieben.

Es ist bekannt, dass Episulfidharze mit nucleophilen Substanzen, d.h. mit Substanzen die an einem ihrer Atome ein freies, basisches Elektronenpaar aufweisen, insbesondere aber mit Polyaminen, extrem rasch reagieren. Diese Reaktionsfreudigkeit kann zur basenkatalysierten Herstellung linearer Polymere aus Episulfidharzen ausgenützt werden und wird z.B. von R.W. Martin in der US-Patentschrift 3 378 522 diskutiert.

Leu et al beschreiben in der CH-PS 598 297 und CH-PS 594 713 die extrem rasche Aushärtung von Episulfidharz/Polyamin-Gemischen und die Verwendung solcher Gemische.

Es wurde nun überraschend gefunden, dass Episulfidharze der allgemeinen Formel V

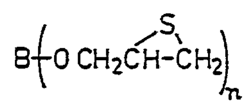

(V)

trotz ihrer elektrophilen Epithiogruppen mit N,N'-disubstituierten Diketiminen der allgemeinen Formel II

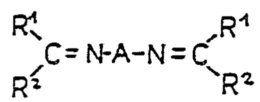

(II)

wobei in den obigen und den nachfolgenden Formeln die Substituenten A, B, $R^1$ und $R^2$ sowie n in den Ansprüchen definiert sind, nur äusserst langsam reagieren, und daher Gemische bilden, die über mehrere Stunden keine merkliche Viskositätszunahme zeigen. Dadurch zeigen diese erfindungsgemässen Zusammensetzungen eine lange Verarbeitungszeit, insbesondere lassen sie sich mit Hilfe einer einfachen I-Komponenten-Spritzanlage applizieren. Die rasche Härtungsreaktion setzt erst dann ein, wenn das Diketimin durch die beim Spritzen aufgenommene Feuchtigkeit hydrolysiert und dadurch das für die Härtung erforderliche Diamin der Formel IX freigesetzt wird (siehe Schema I)

Schema I: Hydrolyse eines Diketimins

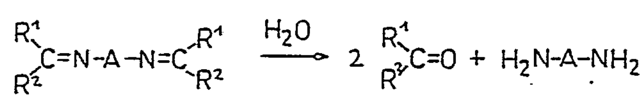


II IX

Die Herstellung der in der erfindungsgemässen Zusammensetzung enthaltenen Episulfidharze ist an sich bekannt, und wird z.B. von R.W. Martin in US-PS 3 378 522 beschrieben. Es handelt sich hierbei jedoch um ein sehr aufwendiges Verfahren mit Reaktionszeiten zwischen 20 und 40 Stunden, wobei die Reaktionsmischung dauernd bei einer Temperatur von 0°C gehalten werden muss.

Völlig überraschend wurde nun ein Verfahren zur Herstellung von I,2-Epithiopropylethern der Formel -(V)

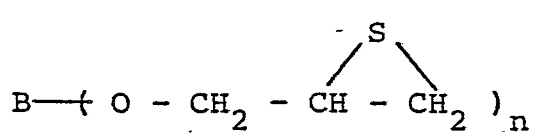

(V)

gefunden,
worin B ein n-wertiger, aromatischer, cycloaliphatischer, aliphatischer, arylaliphatischer Rest ist, und n die Zahlen 2 bis 4 bedeutet, welches dadurch gekennzeichnet ist, dass man einen Glycidylether der Formel (VI)

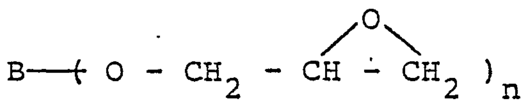

(VI)

worin B und n weiter oben definiert sind,

oder ein Gemisch von Glycidylethern obiger Formel (VI) mit Thioharnstoff in Gegenwart von Aceton oder in Gegenwart eines Lösungsmittelgemisches, enthaltend Dichlormethan und bis zu 50 Gew.-% eines niedrigmolekularen Alkohols, vorzugsweise Methanol, Ethanol, Propanol oder Isopropanol, unter Rückfluss umsetzt.

Bevorzugte Ausführungsformen dieses erfindungsgemässen Verfahrens sind in den abhängigen Ansprüchen beschrieben.

In allen Formeln können allfällig vorhandene Reste und Gruppen gegebenenfalls substituiert sein.

Die folgenden Beispiele dienen der Erläuterung der Erfindung.

## Beispiele

### Allgemeine Bemerkungen

Zur Herstellung der in den folgenden Beispielen I-3 beschriebenen Episulfidharze wurden die folgenden Diglycidylether (Epoxidharze) verwendet:

| Diglycidylether | Typ | Epoxidzahl ($E_o$) |
|---|---|---|
| A | Bisphenol A | 0,1 - 0,57 |
| F | Bisphenol F | 0,1 - 0,57 |
| N | Neopentylglycol-diglycidylether | 0,60- 0,70 |

Unter der Epoxidzahl versteht man die Anzahl Mole Epoxidsauerstoff, die in I00 Gramm Epoxidharz enthalten sind.

Die Epoxidzahl $E_o$ kann durch Titration bestimmt werden, z.B. nach B. Dobinson, W. Hofmann, B. Stark, "The Determination of Epoxide Groups", Seite 55, Pergamon Press I969.

Die Episulfidzahl $E_s$ (Mol Episulfidschwefel pro I00 g Episulfidharz) kann aus NMR-spektroskopischen Daten und Schwefel-Elementaranalysen berechnet werden.

In Beispiel 4 wird die Herstellung eines Diketimins durch Umsetzung von Isobutyl-methylketon und 3-Aminomethyl-3,5,5-cyclohexylamin (IPD) mit einem aktiven H-Aequivalent von $\alpha_H$ = 85,2 beschrieben. Das aktive H-Aequivalent eines Aminhärters ist definiert als

$$\alpha_H = \frac{\text{Molgewicht des Amins}}{\text{Zahl der aktiven H-Atome}}$$

Im Falle eines Diketimins kann ein potentielles aktives H-Aequivalent wie folgt definiert werden:

$$(\alpha_H)\text{pot} = \frac{\text{Molgewicht des Ketimins}}{Z_H}$$

wobei $Z_H$ = Anzahl der potentiell durch Hydrolyse entste henden aktiven H-Atome am Stickstoff.

Das stöchiometrische Mischungsverhältnis von Ketimin zu Episulfidharz berechnet sich dann zu

$(\alpha_H)_{pot} \cdot E_s$ [Gewichtsteile Ketimin pro 100 Gewichtsteile Episulfidharz]

Beispiel 1

Herstellung eines Episulfidharzes vom Bisphenol-A-Typ mit der allgemeinen Formel III

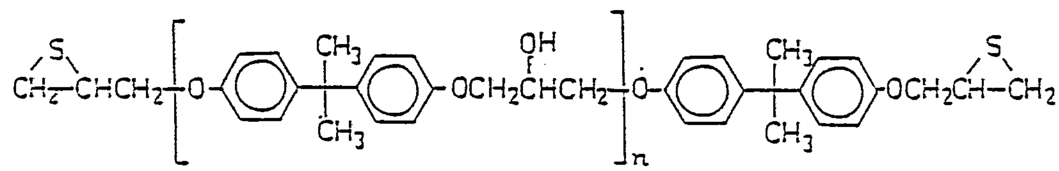

(III)

In einem Dreihalskolben, versehen mit Rückflusskühler, Thermometer und KPG-Rührer wird eine Mischung, bestehend aus 300 g Epoxidharz vom Bisphenol-A-Typ ($E_o$ = 0,55), 125 g Thioharnstoff (1,65 Mol), 300 ml Dichlormethan und 60 ml Ethanol während 5 Stunden unter Rühren zum Rückfluss (45°C) erhitzt.

Anschliessend werden unter kraftigem Rühren rasch 300 ml Leitungswasser (18°C) zugegeben und noch 5 Minuten weitergerührt, wobei die Temperatur auf 30°C fällt. Das gesamte Reaktionsgemisch wird mit der organischen Phase in einen Scheidetrichter transferiert, wobei sich innerhalb weniger Minuten eine scharfe Phasentrennung einstellt. Die organische Phase wird abgetrennt und nochmals mit 300 ml Wasser ausgeschüttelt, zur Trocknung mit 15 g wasserfreiem Natriumsulfat versetzt und so lange gerührt, bis die überstehende Lösung keine Trübung mehr aufweist. Nach Filtration und Abdampfen des Lösungsmittels werden 305 g eines fast farblosen Episulfidharzes erhalten, das sich wie folgt charakterisieren lässt:

NMR ($CDCl_3$): 2,31 ppm (Dublett, 1 H)
2,47 ppm (Dublett, 1 H)
5,22 ppm (Singlet, 2H, $CH_2Cl_2$)

Viskosität (25°C): 25 000 mPa•s
$E_o$ = 0,08 ; $E_s$ = 0,42 Mol/100 g
Dichte (g/ml/25°): 1,15 ± 0,05

Das Harz beginnt nach 2 Tagen Stehen bei Raumtemperatur zu kristallisieren.

Beispiel 2

Herstellung eines Gemisches von Episulfidharzen mit den allgemeinen Formeln III und IV

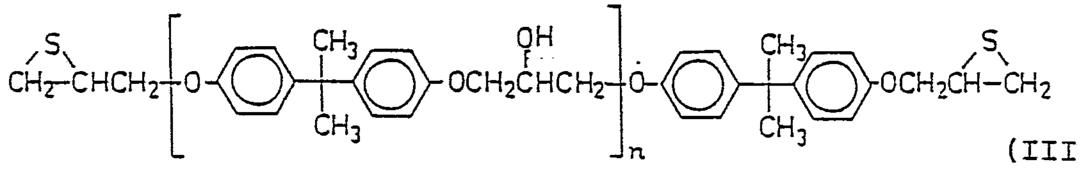

(III)

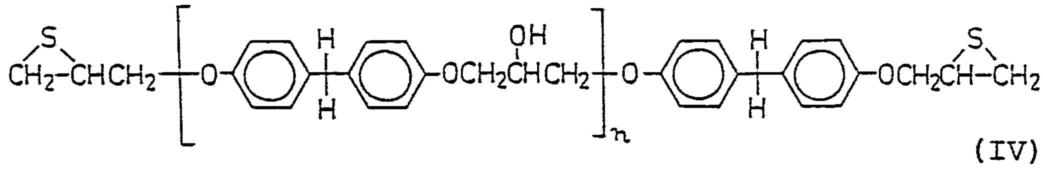

(IV)

In einem Dreihalskolben mit KPG-Rührer, Thermometer und Rückflusskühler werden 127 g (1,65 Mol) Thioharnstoff, 90 g Diglycidylether F ($E_o$ = 0,56), 210 g Diglycidylether A ($E_o$ = 0,55), 300 ml Dichlormethan und 60 ml Ethanol gemischt und während 5 Stunden bei 45°C unter Rühren zum Rückfluss erhitzt. Anschliessend werden unter kräftigem Rühren 300 ml Wasser (18°C) zugegeben. Nach der in Beispiel I beschriebenen Aufarbeitung werden 300 g eines blassgelben Episulfidharzes mit folgender Charakteristik erhalten:

Viskosität (25°C): 17 000 mPa•s
$E_o$ = 0,04 ; $E_s$ = 0,46 Mol/100 g
Dichte (g/ml/25°C): 1,16 ± 0,05
NMR ($CDCl_3$) : 2,30 ppm (Dublett, 1H)   2,48 ppm (Dublett, 1H)

Das Harz zeigt auch nach mehrmonatiger Lagerung (22-25°C) keine Kristallisation.

Beispiel 3

Herstellung eines niedrigviskosen, nicht auskristallisierenden Episulfidharzgemisches.

Nach der in Beispiel I und 2 beschriebenen Herstellvorschrift wird ein Gemisch, bestehend aus 72 g Diglycidylether F, 168 g Diglycidylether A und 60 g Diglycidylether N ($E_o$ = 0,70) mit 130 g (1,7 Mol) Thioharnstoff umgesetzt und das Reaktionsprodukt wie beschrieben aufgearbeitet.

Es werden 300 g eines leicht gelben Episulfidharzes erhalten.

Viskosität (25°C): 8 000 mPa•s
$E_o$ = 0,03 ; $E_s$ = 0,49 Mol/100 g
Dichte (g/ml/25°C): 1,14 ± 0,05

Beispiel 4

Herstellung eines Diketiminhärters durch Umsetzung von IPD mit Isobutyl-methylketon.

In einem Dreihalskolben, versehen mit einem Wasserabscheider und einem KPG-Rührer,werden 120 g -(0,71 Mol) IPD, 150 g Toluol und 0,9 g p-Toluolsulfonsäure vorgelegt und dann unter Rühren rasch mit 169,5 g (1,69 Mol) Iso butylmethylketon versetzt. Anschliessend wird die Lösung auf 100°C erhitzt, wobei sich langsam Wasser abzuscheiden beginnt. Die Temperatur steigt nun langsam auf 115°C an. Sobald sich die berechnete Menge (30 g) Wasser abgeschieden hat, wird das Toluol und das überschüssige Keton unter Wasserstrahlvakuum am Rotationsverdampfer abgezogen.

Es werden 240 g eines leichtbeweglichen gelben Oels erhalten.

Die gaschromatographische Analyse des Oels ergab folgende Zusammensetzung:

| | |
|---|---|
| Isobutyl-methylketon | 11,5 % |
| Monoketimin | 2 % |
| Diketimin | 85,5 % |
| Unbekannt | 1 % |

$(\alpha_H)_{pot}$ = 95,4

Beispiel 5

Ein durch Einwirkung von Luftfeuchtigkeit rasch aushärtender, lösungsmittelhaltiger Zweikomponenten-Spritzlack (Klarlack) lässt sich nach folgender Rezeptur herstellen:

| A) Harzkomponente | Gewichtsteile |
|---|---|
| Episulfidharz nach Beispiel 2 | 85 |
| Dichlormethan | 15 |
| | 100 |

| B) Härterkomponente | |
|---|---|
| Diketimin nach Beispiel 4 | 47,7 |
| 4,4'-Diazabicyclo[2.2.2]octan | 2,3 |
| Isobutylmethylketon | 29 |
| Ameisensäure | 1 |
| | 79,0 |

Durch Mischen der Komponenten A) und B) wird ein mit den üblichen Spritzapparaturen applizierbarer Klarlack mit folgenden Eigenschaften erhalten:

Topfzeit (25°C): 4 Stunden
Staubtrockenzeit (0°C): 15 Minuten
Staubtrockenzeit (25°C): 5 Minuten
Klebfreiheit (25°C): 10 Min. nach Auftrag
Klebfreiheit (0°C) : 30 Min. nach Auftrag
Mit Wasser oder mechanisch belastbar: 1 Stunde nach Auftrag
Endhärte (25°C): nach 90 Minuten erreicht
Pendelhärte nach König
50 µ Schichtdicke 130 Sekunden
100 µ Schichtdicke 125 Sekunden

Beispiel 6

Durch Einwirkung von Luftfeuchtigkeit rasch aushärtende, lösungsmittelarme Zweikomponenten-Spritzbeschichtung nach folgender Rezeptur:

| A) Harzkomponente | Gewichtsteile |
|---|---|
| Episulfidharz nach Beispiel 2 | 56 |
| Ethylglycolacetat | 4 |
| Dichlormethan | 5 |
| Pyrogene Kieselsäure | 10 |
| $TiO_2$ | 7 |
| Eisenoxid schwarz | 0,5 |
| Blanc Baryt | 17,5 |
| | 100 |

| B) Härterkomponente | |
|---|---|
| Diketimin nach Beispiel 4 | 26 |
| 4,4'-Diazobicyclo[2.2.2]octan | 2 |
| Ameisensäure wasserfrei | 5 |
| Isobutyl-methylketon | 5 |
| | 38 |

Durch Mischen der Komponenten A) und B) wird eine mit den üblichen Airless-Spritzanlagen verarbeitbare Beschichtung mit folgenden Eigenschaften erhalten: Topfzeit (25°C): 6 Stunden

Staubtrockenzeit (0°C): 15 Minuten
Staubtrockenzeit (25°C): 5 Minuten
Klebfreiheit (0°C): nach 25 Minuten
Klebfreiheit (25°C): nach 10 Minuten
Mit Wasser oder mechanisch belastbar: 1 Stunde nach Auftrag
Endhärte (25°C): nach 120 Minuten erreicht
Pendelhärte nach König
100 μ Schichtdicke 140 Sekunden
200 μ Schichtdicke 140 Sekunden

**Ansprüche**

1. Durch Einwirkung von Feuchtigkeit aushärtende Zusammensetzung, enthaltend

a) eine oder mehrere Episulfidverbindungen, die im Durchschnitt mehr als eine 1,2-Epithiopropylethergruppe der Formel (I)

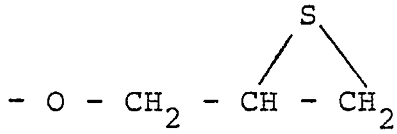 (I)

pro Molekül aufweisen, und

b) eines oder mehrere aliphatische N,N'-dialkylsubstituierte Diketimine der allgemeinen Formel (II)

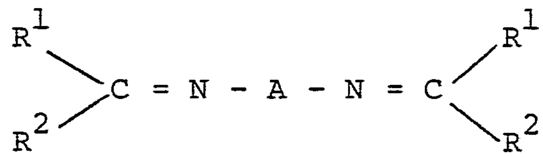 (II)

worin

A ein zweiwertiger aliphatischer, cycloaliphatischer oder arylaliphatischer Rest ist, und

$R^1$ und $R^2$ je einen Alkylrest bedeuten, oder zusammen mit dem C-Atom, an welches sie gebunden sind, einen Cycloalkylrest oder Cycloalkenylrest bilden, und

c) mindestens einen Stoff, ausgewählt aus der Gruppe der Erhärtungsbeschleuniger sowie handelsüblicher Lösungsmittel, Reaktivverdünner, Weichmacher, Thixotropierungszusätze, Füllstoffe und Pigmente.

2. Zusammensetzung nach Anspruch I, dadurch gekennzeichnet, dass die Episulfidkomponente nach a) ein I,2-Epithiopropylether eines mehrwertigen Phenols ist,

vorzugsweise ein sich von Bisphenol A ableitender Epithiopropylether der allgemeinen Formel (III)

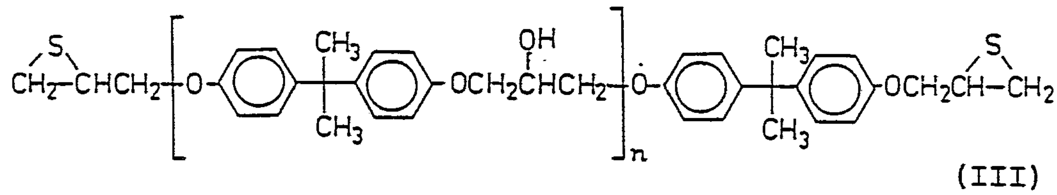

(III)

wobei n = 0-50, vorzugsweise 0-20, insbesondere 0-I0,

oder ein sich von Bisphenol F ableitender Epithiopropylether der allgemeinen Formel (IV)

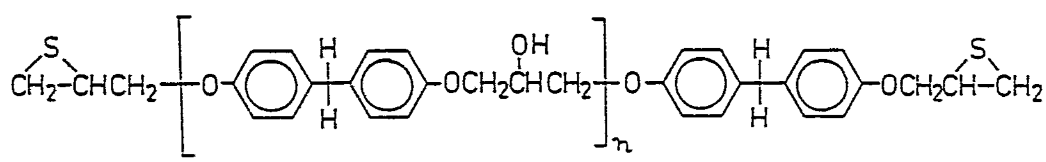

(IV)

wobei n = 0-50, vorzugsweise 0-20, insbesondere 0-I0,

oder ein Gemisch der Stoffe III und IV in beliebigem Gewichtsverhältnis.

3. Zusammensetzung nach einem der Ansprüche I bis 2, dadurch gekennzeichnet, dass die Komponente nach a) nebst den Stoffen III und IV zusätzlich noch bis zu 50 Gew.-% wenigstens eines mehrwertigen Epithiopropylethers enthält, der von einem mehrwertigen Alkohol, ausgewählt aus der Gruppe bestehend aus Glycerin, I,4-Butandiol, Neopentylglycol, Hexandiole, isomere Cyclohexan-dimethanole, Ethylenglycol und Diethylenglycol, abgeleitet ist.

4. Zusammensetzung nach Anspruch I, dadurch gekennzeichnet, dass die Diketiminkomponente nach b) eine der folgenden Formeln aufweist:

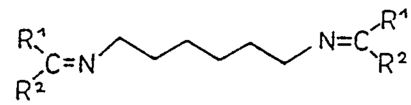

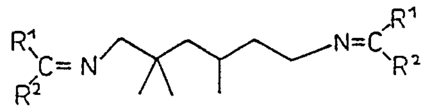

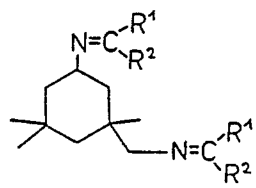

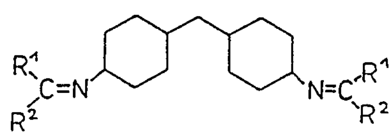

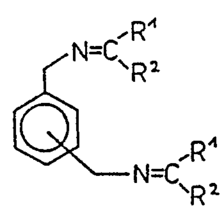

wobei in obigen Formeln $R^1$ und $R^2$ je eine Methyl-, Ethyl-, Isopropyl-, oder Isobutylgruppe bedeuten, oder zusammen mit dem Kohlenstoffatom, an welches sie gebunden sind, einem Cyclohexanring oder einen 3,5,5-Trimethyl-cyclohex-2-en-Ring bilden,

oder

von einem Polyamid mit zwei endständigen primären Aminogruppen, die eine Aminzahl im Bereich von 80 bis 320 mg KOH pro Gramm des Polyamides aufweisen, abgeleitet ist.

5. Zusammensetzung nach Anspruch I, dadurch gekennzeichnet, dass der Härtungsbeschleuniger nach c) ein handelsübliches tertiäres Amin ist, vorzugsweise I,4-Diazabicyclo[2.2.2]octan oder Tetramethylguanidin oder Dimethylaminobenzylamin oder 2,4,6-Tris-(dimethylaminomethyl)-phenol.

6. Zusammensetzung nach Anspruch I, dadurch gekennzeichnet, dass die Komponenten nach a) und b) bezüglich ihrer Epithiogruppen und potentiellen Aminogruppen im stöchiometrischen Mischungsverhältnis vorliegen.

7. Zusammensetzung nach Anspruch I, dadurch gekennzeichnet, dass der Härtungsbeschleuniger nach c) in einer Menge von 0,05 bis 20 Gew.-%, bezogen auf das Gewicht der Komponenten a) und b), enthalten ist.

8. Verfahren zur Herstellung von I,2-Epithiopropylethern der Formel (V)

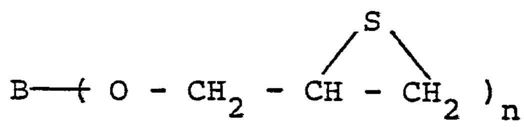

(V)

worin B ein n-wertiger, aromatischer, cycloaliphatischer, aliphatischer, arylaliphatischer Rest ist, und n die Zahlen 2 bis 4 bedeutet,
dadurch gekennzeichnet, dass man einen Glycidylether der Formel (VI)

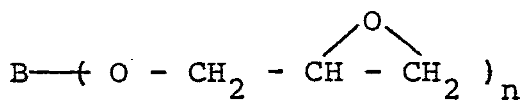

(VI)

worin B und n weiter oben definiert sind,
oder ein Gemisch von Glycidylethern obiger Formel (VI) mit Thioharnstoff in Gegenwart von Aceton oder in Gegenwart eines Lösungsmittelgemisches, enthaltend Dichlormethan und bis zu 50 Gew.-% eines niedrigmolekularen Alkohols, vorzugsweise Methanol, Ethanol, Propanol oder Isopropanol, unter Rückfluss umsetzt.

9. Verfahren nach Anspruch 8, dadurch gekennzeichnet, dass der Thioharnstoff im Verlhältnis von 0,5 bis I Mol pro Mol der umzusetzenden Epoxidgruppen eingesetzt wird.

I0. Verfahren nach einem der Ansprüche 8 bis 9, dadurch gekennzeichnet, dass man einen Diglycidylether des Bisphenols A der allgemeinen Formel (VII)

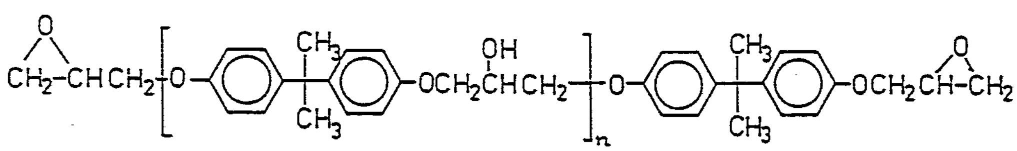

(VII)

wobei n = 0-50, vorzugsweise 0-20, insbesondere 0-I0,
oder
einen Diglycidylether des Bisphenols F der allgemeinen Formel (VIII)

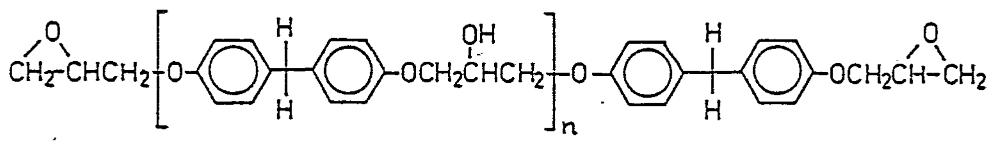

(VIII)

wobei n = 0-50, vorzugsweise 0-20, insbesondere 0-I0, vorzugsweise aber ein Gemisch der Diglycidylether der Formeln VII und VIII,umsetzt.

11. Verfahren nach einem der Ansprüche 8 bis 9, dadurch gekennzeichnet, dass der Glycidylether der Formel (VI) ausgewählt ist aus der Gruppe, bestehend aus dem Triglycidylether des Glycerins, 1,4-Butandioldiglycidylether, Neopentylglycol-diglycidylether, Hexandiol-diglycidylether, den Diglycidylethern der isomeren Cyclohexandimethanolen, Ethylenglycol-diglycidylether und Diethylenglycol-diglycidylether.

12. Verwendung der Zusammensetzungen nach den Ansprüchen 1-7 als Lacke, Anstriche und Beschichtungen für Stahl und Beton.